# EUROPÄISCHE PATENTANMELDUNG

(11) **EP 1 462 223 A1**
(43) Veröffentlichungstag der Anmeldung: **29.09.2004**
(21) Anmeldenummer: 04005046.0
(22) Anmeldetag: 04.03.2004
(51) Int. Cl.: B25J 9/16, G01B 21/04

(54) **Verfahren und Vorrichtung zum Prüfen und/oder Einstellen von Funktionsteilen von robotergeführten Vorrichtungen**

(30) Priorität: 25.03.2003 DE 20304869 U
(71) Anmelder: KUKA Schweissanlagen GmbH, 86165 Augsburg (DE)
(72) Erfinder: Kikut, Botho, 86157 Augsburg (DE); Nüchter, Elmar, 86167 Augsburg (DE)
(74) Vertreter: Ernicke, Hans-Dieter, Dipl.-Ing.

(57) **Zusammenfassung**

Die Erfindung betrifft ein Verfahren und eine Vorrichtung zum Prüfen und/oder Einstellen von Funktionsteilen (5,6,7) von robotergeführten Greifeinrichtungen (2). Die Greifeinrichtung (2) wird vom Roboter (3) an eine in seinem Arbeitsbereich angeordnete Prüf- und Einstellvorrichtung (1) herangeführt, welche ein oder mehrere formschlüssige Aufnahmen (10,11,12) zur genauen Positionierung von ein oder mehreren Funktionsteilen (5,6,7) der Greifvorrichtung (2) aufweist. Hierbei wird mindestens ein Funktionsteil (5,6,7) in formschlüssigen Kontakt mit einer Aufnahme (10,11,12) gebracht. Zum Einrichten wird die feste Verbindung des Funktionsteils (5,6,7) an der Greifeinrichtung (2) gelockert oder gelöst, wobei das Funktionsteil (5,6,7) an der Aufnahme (10,11,12) formschlüssig positioniert und ausgerichtet, anschließend zumindest temporär festgehalten und zum Schluss wieder an der Greifeinrichtung (2) fixiert wird.

## Beschreibung

Die Erfindung betrifft ein Verfahren und eine Vorrichtung zum Prüfen und/oder Einstellen von Funktionsteilen von robotergeführten Vorrichtungen, insbesondere Greifeinrichtungen mit den Merkmalen im Oberbegriffs des Verfahrens- und Vorrichtungshauptanspruchs.

Vorrichtungen der genannten Art werden in teil- oder vollautomatischen Anlagen oder Zellen beim Rohbau von Fahrzeugkarosserien eingesetzt. Die Vorrichtungen sind beispielsweise als Greifeinrichtungen ausgebildet und halten positions- und formgenau ein oder mehrere Karosserieteile. Die Greifeinrichtung besteht beispielsweise aus einem Gestell oder mehreren Funktionsteilen, die als Spanner oder Bauteilzentrierungen ausgebildet sein können. Das Gestell kann aus mehreren Rohren zusammengesetzt sein. Derartige hochpräzise Greifeinrichtungen werden auch als Handlinggreifer, Prozessgreifer oder Geogreifer bezeichnet. Die Vorrichtung wird von einem Roboter geführt und relativ zu anderen Karosseriebauteilen und anderen Bearbeitungsvorrichtungen und sonstigen Komponenten der Anlage oder Zelle bewegt. Hierbei kann es zu Kollisionen und Crashs kommen, bei denen unter Umständen die Vorrichtung beschädigt wird. Derartige Beschädigungen führen meist zu einer geometrischen Veränderung der Vorrichtung. Hierbei können z.B. funktions- oder bauteilrelevante Vorrichtungsteile, wie Spanner, Greifer, Pass- oder Scherstifte, Bauteilzentrierstifte oder dergleichen verbogen, verdreht oder auf andere Weise aus ihrer Soll-Position gebracht werden. Gleiches kann durch eine Verformung des Gestells, insbesondere seiner Rohre geschehen. Durch diese meist bleibende Verformung können die Bauteile nicht mehr exakt genug gegriffen und gespannt werden.

Greifeinrichtungen der genannten Art sind häufig modular aufgebaut, z.B. entsprechend der DE 200 00 645 U1 oder der DE 200 04 369 U1. Bei einer solchen Konstruktion sind die Funktionsteile, insbesondere Spanner und Bauteilzentrierungen über eine Klemmverbindung am Gestell befestigt. Im Crashfall können diese Funktionsteile aus ihrer Position verschoben werden. Dies lässt sich wieder reparieren, wobei allerdings die Greifeinrichtung vom Roboter abgenommen und in einer externen Montagelehre im Vorrichtungsbau wieder wie bei der Erstmontage vollkommen neu aufgebaut und vermessen werden muss. Dies ist ein zeitraubender und arbeitsaufwändiger Vorgang.

Es ist Aufgabe der vorliegenden Erfindung, die Überprüfung und gegebenenfalls Reparatur von Vorrichtungen der genannten Art zu vereinfachen.

Die Erfindung löst diese Aufgabe mit der beanspruchten Prüf- und Einstelltechnik und den Merkmalen im Verfahrensund Vorrichtungshauptanspruch.
Die beanspruchte Verfahrens- und Vorrichtungstechnik hat den Vorteil, dass die Greiferreparatur vor Ort und ohne Demontage vom Roboter durchgeführt werden kann. Zudem ist der Reparatur- und Einrichtaufwand wesentlich geringer als beim Stand der Technik.

Die Prüf- und Einstelltechnik erleichtert besonders die Reparatur von modularen Vorrichtungen und Greifeinrichtungen. Die Funktionsteile können für die Reparatur in ihrer Verbindung zum Gestell gelockert oder gelöst werden, mittels der Prüf- und Einstellvorrichtung in die korrekte Position und Ausrichtung gebracht, dort ggf. zumindest temporär festgehalten und dann wieder in dieser Position mit dem Greifergestell fest verbunden werden. Die Prüf- und Einstellvorrichtung weist hierfür ein oder mehrere an die jeweiligen Funktionsteile angepasste Aufnahmen auf.

Die Vorrichtung oder Greifeinrichtung wird für und während des Prüf- und Einstell- bzw. Reparaturvorgangs vom Roboter geführt und ein oder mehrmals in einer exakten Soll-Position gegenüber der Prüf- und Einstellvorrichtung und deren Aufnahmen gehalten. Die korrekte Roboterposition kann zuvor bei der Inbetriebnahme und mit einer unbeschädigten Vorrichtung bzw. Greifeinrichtung ermittelt und fest abgespeichert werden. Die Roboter-Soll-Position kann alternativ aber auch auf andere Weise und zum Beispiel aus den Konstruktions- oder Anlagendaten gewonnen werden.

Die Einricht- und Reparaturgenauigkeit kann von der Positioniergenauigkeit des Roboters abhängen. Um hier eine möglichst große Genauigkeit zu erzielen, kann die Prüfund Einstellvorrichtung ein oder mehrere Referenzpunkte haben, an denen sich der Roboter zur Überprüfung und eventuellen Korrektur seiner Positioniergenauigkeit referieren und einmessen kann. Dies kann z.B. über den Tool-Center-Point (TCP) des Roboters geschehen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 bis 5:: einen Roboter mit einer Greifeinrichtung sowie einer Prüf- und Einstellvorrichtung in verschiedenen perspektivischen Ansichten,

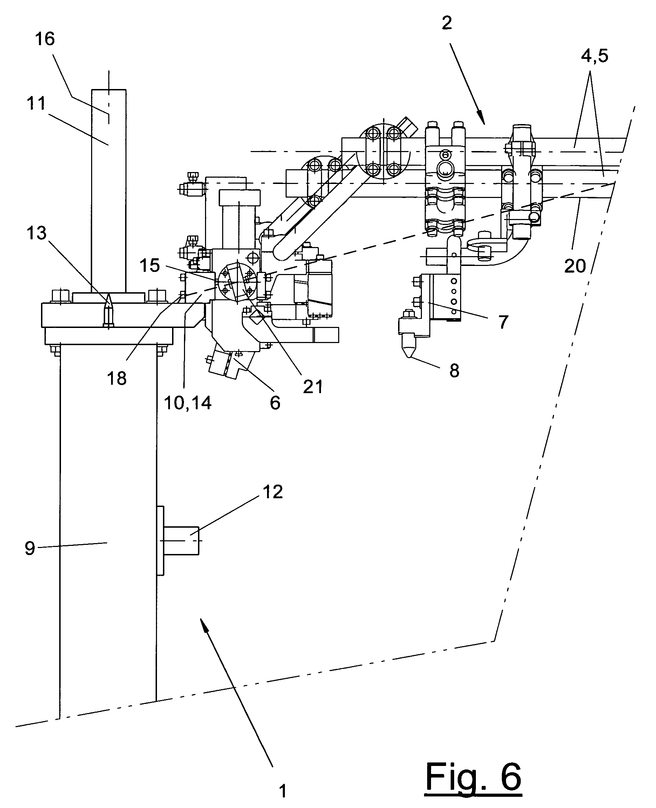

- Figur 6:: eine vergrößerte Seitenansicht eines Funktionsteils der Greifeinrichtung der Prüf- und Einstellvorrichtung,

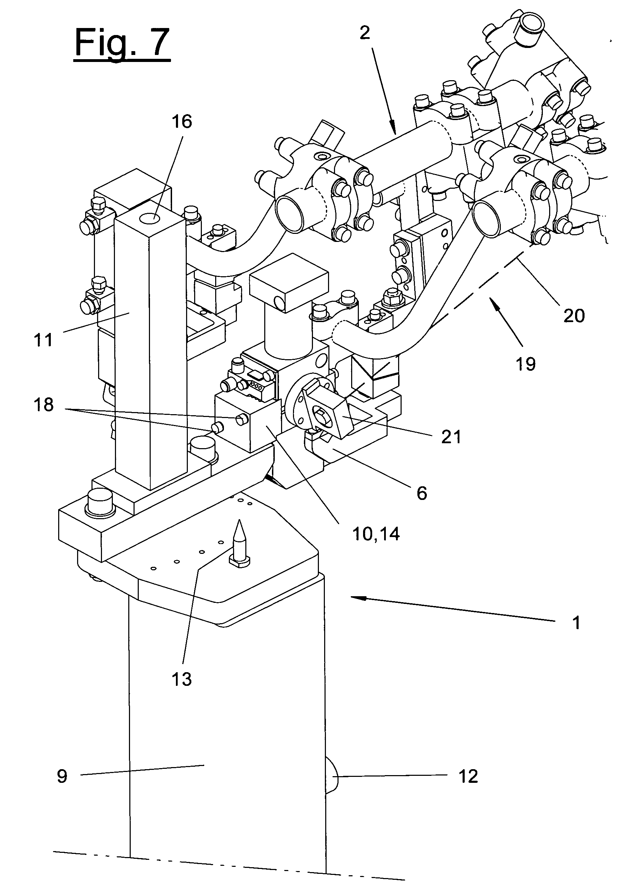

- Figur 7:: eine andere perspektivische Ansicht der gleichen Position von Figur 6 und

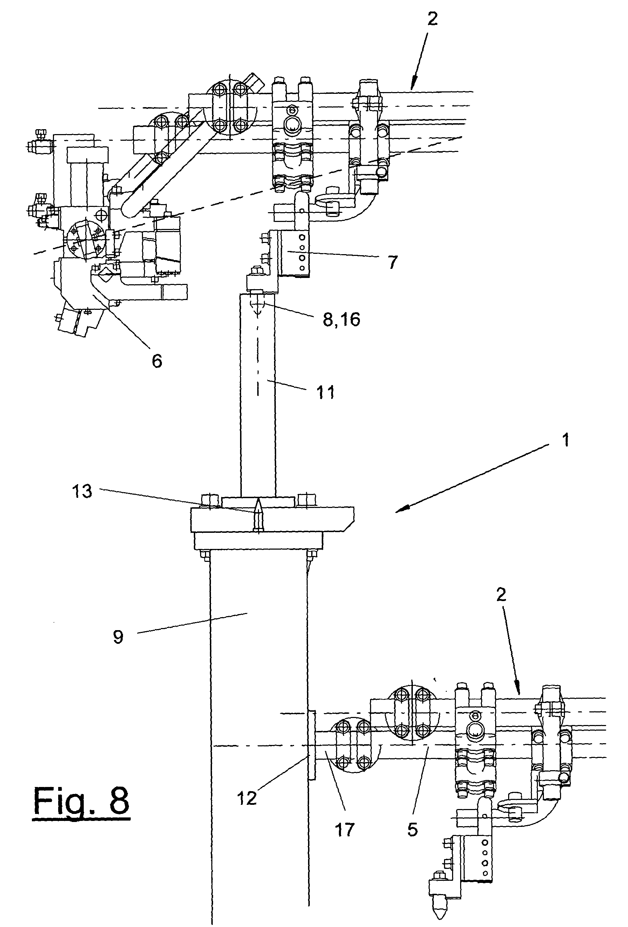

- Figur 8:: abgebrochene und vergrößerte Darstellungen anderer Funktionsteile an der Prüf- und Einstellvorrichtung.

Die Erfindung betrifft ein Verfahren zum Prüfen und/oder Einrichten von Funktionsteilen (5,6,7) von robotergeführten Vorrichtungen und eine hierfür eingesetzte Prüf- und Einstellvorrichtung (1), die vorzugsweise sowohl das Prüfen, wie auch das Einstellen erlaubt.

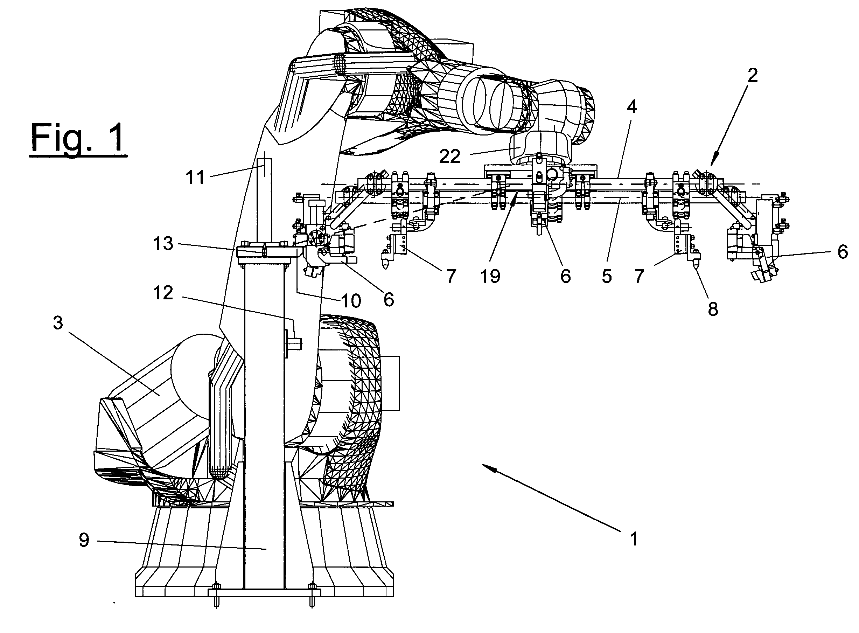

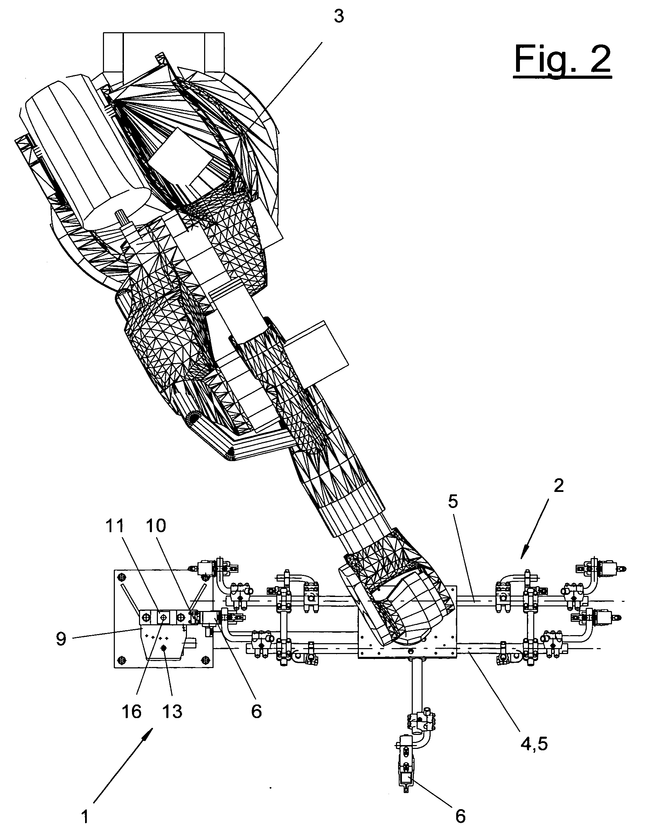

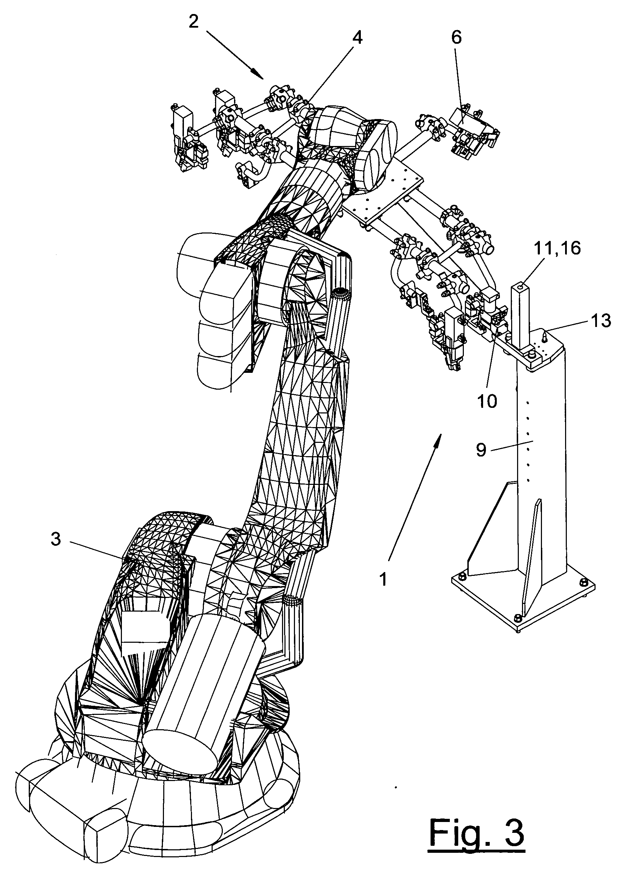

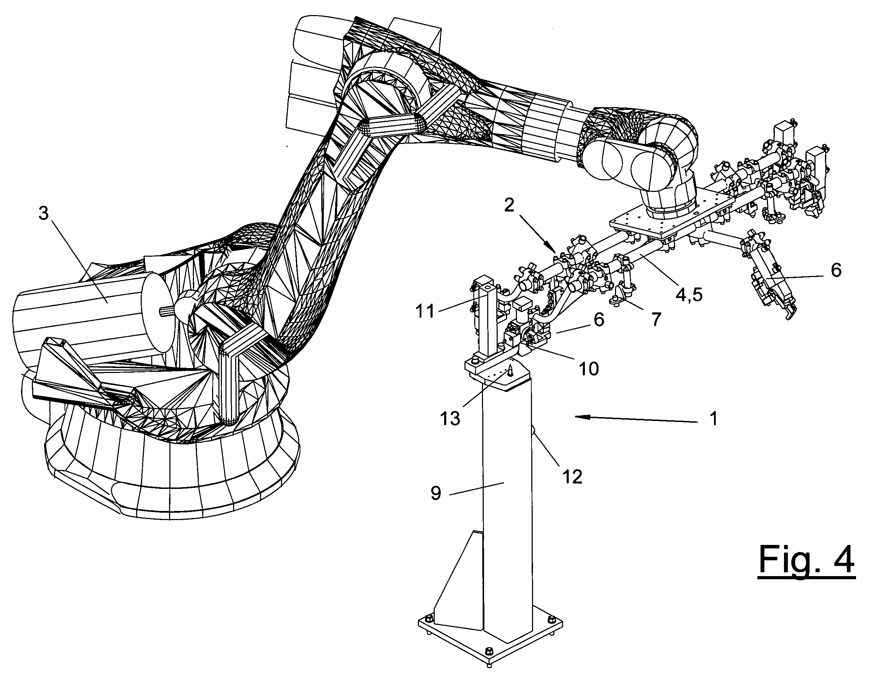

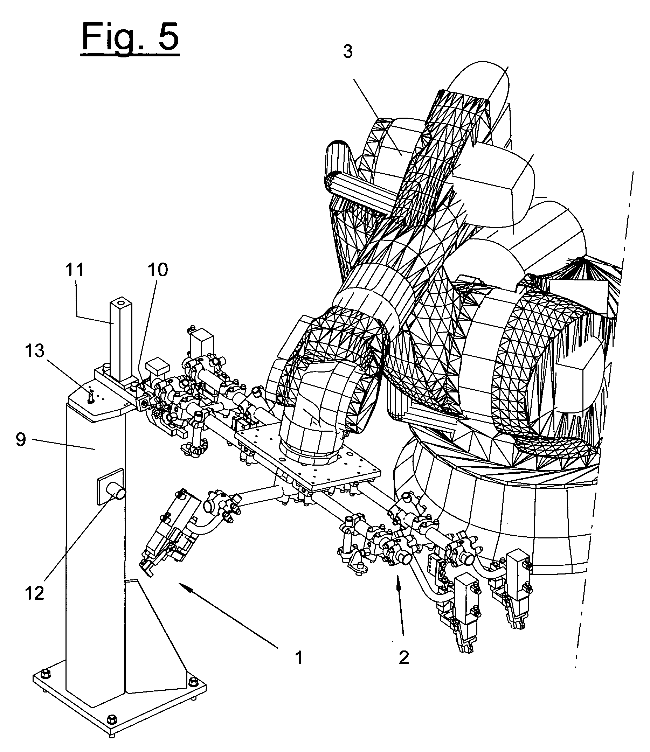

In Figur 1 bis 5 ist ein Teil einer Zelle oder Anlage aus der Rohbaufertigung von Fahrzeugkarosserien dargestellt. Die Zeichnungen zeigen einen Roboter (3) mit einer Vorrichtung (2) zum genauen Halten und Führen von Karosseriebauteilen (nicht dargestellt). Der Roboter (3) ist vorzugsweise als mehrachsiger Industrie-Roboter, insbesondere als sechsachsiger Gelenkarmroboter ausgebildet, der gegebenenfalls noch weitere Achsen, insbesondere zusätzliche Fahrachsen haben kann. Alternativ kann der Roboter (3) eine beliebige andere Ausgestaltung oder Achsanordnung haben.

Die Vorrichtung (2) ist in der bevorzugten Ausführungsform als Greifeinrichtung, insbesondere als Handling-, Prozessoder Geogreifer zum exakten Halten und Führen von Karosseriebauteilen ausgebildet. Die Vorrichtung (2) kann entsprechend der DE 200 00 645 U1 oder der DE 200 04 369 U1 ausgebildet sein.

Die dargestellte Greifeinrichtung (2) besteht aus einem Gestell (4), welches mit der Roboterhand (22) verbunden ist. Gegebenenfalls ist eine Wechselkupplung zur lösbaren Verbindung vorgesehen. Das Gestell (4) wird z.B. von einem mit der Roboterhand (22) direkt oder mittelbar, z.B. über die Wechselkupplung, verbindbaren Grundkörper und ein oder mehreren Rohren (5) gebildet. Diese Rohre können sogenannte Funktionsteile der Greifeinrichtung (2) sein. Zum exakten Halten und Führen der Bauteile sind an den Rohren (5) weitere Funktionsteile (6,7), zum Beispiel Spanner (6) und Bauteilzentrierungen (7) mit exakten Positionen und Ausrichtungen bzw. Orientierungen befestigt. Die Befestigung kann über eine Klemmverbindung mit Pass- und Scherstiften erfolgen. Vorzugsweise werden hierbei nach dem Einrichten die Passstifte bei den Spannern (6) und Bauteilzentrierungen (7) wieder entfernt, damit diese nur noch durch die Klemmung an den Rohren (5) gehalten sind. Alternativ können die Passstifte auch verbleiben.

Die Greifeinrichtung (2) kann eine mitgeführte Kontrolleinrichtung (19) aufweisen, mit der während des Greiferbetriebs die Einhaltung der genauen Position und Orientierung der Funktionsteile (5,6,7) und damit der gesamten Greifergeometrie überwacht werden kann. Die Kontrolleinrichtung (19) ist z.B. in der in der DE 202 19 713 U1 beschriebenen Weise ausgebildet und besteht aus ein oder mehreren Sendeeinheiten, die einen Laserstrahl (20) mit exakter Ausrichtung emittieren, der an genau positionierten Reflektoren (21) an den Funktionsteilen (5,6,7) reflektiert und dann wieder einer Empfangseinheit aufgenommen wird. Sobald sich im Crashfall oder auf Grund anderer Einflüsse die Position eines überwachten Funktionsteils (5,6,7) ändert, ändert sich auch das Reflexionsverhalten für den Laserstrahl (20), was von der Empfangseinrichtung bemerkt und als Fehler signalisiert wird.

Falls es zu derartigen Positionsänderungen der Funktionsteile (5,6,7) oder zu anderen Änderungen der Greifergeometrie, zum Beispiel durch eine insbesondere bleibende Verformung des Gestells (4) kommt, sollte die Greifeinrichtung (2) wieder repariert und genau eingestellt werden. Zu diesem Zweck ist eine Prüf- und Einstellvorrichtung (1) vorgesehen, die extern und im Arbeitsbereich des Roboters (3) angeordnet ist. Der Roboter (3) führt die Greifeinrichtung (2) gegenüber dieser Prüf- und Einstellvorrichtung (1), die vorzugsweise stationär angeordnet ist. An der Prüf- und Einstellvorrichtung (1) kann die Vorrichtung (2) geprüft und vorzugsweise gleich an Ort und Stelle eingerichtet werden. Alternativ kann nur eine Prüfung durchgeführt werden.

Die Prüf- und Einstellvorrichtung (1) weist ein oder mehrere formschlüssige Aufnahmen (10,11,12) zur genauen Positionierung und ggf. auch zumindest temporären Fixierung von ein oder mehreren Funktionsteilen (5,6,7) der Greifeinrichtung (2) auf. Dies sind vorzugsweise speziell angepasste Justier-Aufnahmen, die eine exakt definierte und bekannte Position und Ausrichtung im Raum haben. Sie sind getrennt von den mittels der Vorrichtung (2) zu handhabenden Bauteilen oder Werkstücken (nicht dargestellt) angeordnet. Die Justier-Aufnahmen sind als bauteilunabhängige Referenzen besonders gut geeignet, weil sie die exakte Soll-Lage und Soll-Ausrichtung der Funktionsteile (5,6,7) vorgeben und dabei von Bauteilfehlern unabhängig sind. Die Funktionsteile (5,6,7) können hierdurch beim Einrichten in die vorgegebene Position und Ausrichtung gebracht werden, um dann im Betrieb evtl. Bauteilfehler, insbesondere Bauteilverformungen oder dgl., ausgleichen zu können.

Mittels dieser Aufnahmen (10,11,12) können die betroffenen Funktionsteile (5,6,7) nach Lösen oder Lockern ihrer Verbindung mit der Greifereinrichtung (2), insbesondere deren Gestell (4) wieder in die exakte Position eingerichtet und in dieser auch ggf. zumindest temporär fixiert werden. Anschließend kann das Funktionsteil (5,6,7) wieder fest über eine Klemmverbindung oder auf andere Weise mit dem Gestell (4) oder anderen Teilen der Greifeinrichtung (2) verbunden werden, wodurch die exakte Greifergeometrie wieder hergestellt ist. Nach Lösen des Funktionsteils (5,6,7) von der Aufnahme (10,11,12) ist die Greifeinrichtung (2) wieder betriebsbereit.

Dieser Einrichtvorgang kann ohne Demontage der Greifeinrichtung vom Roboter (3) durchgeführt werden. Der Roboter (3) bringt vielmehr die Greifeinrichtung (2) mit ihren zu überprüfenden oder neu einzurichtenden Funktionsteilen (5,6,7) in die exakte Soll-Position zu den Aufnahmen (10,11,12) der Prüf- und Einstellvorrichtung (1). Zu diesem Zweck wird bei der Inbetriebnahme oder zu einem anderen geeigneten Zeitpunkt die unbeschädigte Greifeinrichtung (2) vom Roboter (3) mit einigen oder vorzugsweise allen relevanten Funktionsteilen (5,6,7) an die jeweilige Aufnahme (10,11,12) vorsichtig heranbewegt und hier exakt positioniert. Diese exakte Position kann per Handsteuerung des Roboters (3) in einem Teaching-Vorgang aufgefunden werden. Sie lässt sich alternativ auch automatisch und direkt über bekannte oder auf beliebige Weise ermittelte Positionsdaten anfahren. Insbesondere wenn die Prüf- und Einstellvorrichtung (1) mit ihren Aufnahmen (10,11,12) exakt vermessen und positioniert ist, kann der Roboter (3) die mit ihren Positionen und Orientierungen ebenfalls exakt bekannten Funktionsteile (5,6,7) direkt an den zugehörigen Aufnahmen (10,11,12) positionieren. Die für jede Positionierung zwischen Funktionsteil (5,6,7) und zugehöriger Aufnahme (10,11,12) sich ergebende Roboterposition wird aufgenommen und dauerhaft gespeichert. Sie bildet den Sollwert für spätere Prüfungen und insbesondere ein Einrichten und Reparieren der Greifeinrichtung (2) und ihrer Funktionsteile (5,6,7). Bei einem solchen Einrichtvorgang kann in der vorbeschriebenen Weise der Roboter (3) die Greifeinrichtung (2) und das jeweils betroffene Funktionsteil (5,6,7) in die Sollposition zur jeweiligen Aufnahme (10,11,12) bringen, wo dann das Funktionsteil (5,6,7) in der vorbeschriebenen Weise eingerichtet wird.

Die Aufnahme (10) für einen Spanner (6) besitzt mindestens einen Anschlagkörper (14), der ein oder mehrere Anschlagseiten für einen Flächenkontakt mit ein oder mehreren definierten Anschlagflächen (15) des Spanners (6) aufweisen kann. Der Anschlagkörper (14) ist zum Beispiel als Quader oder Würfel ausgebildet und hat zumindest zwei in einem beispielsweise 90° Winkel angeordnete Anschlagseiten. Die Anschlagflächen (15) sind am Gehäuse des Spanners (6) vorhanden, wobei diese als exakt bearbeitete Flächen ausgebildet sind, die genau zu den Anschlagsseiten passen. Durch einen formschlüssigen Kontakt zwischen Anschlagflächen und Anschlagseiten kann der Spanner (6) an der Aufnahme (10) exakt positioniert und orientiert werden.

Er kann an der Aufnahme (10) zumindest temporär in dieser Position mittels einer geeigneten Einrichtung fixiert werden. Hierfür ist eine geeignete temporäre Halterung (18) vorgesehen, die beispielsweise als Schraubverbindung am Anschlagkörper (14) ausgebildet ist. Es kann sich alternativ aber auch um eine Klemmverbindung, eine Magnetverbindung oder dergleichen handeln. Der vom Gestell (4) zumindest teilweise gelöste Spanner (6) kann somit in die Soll-Lage gebracht, hier temporär fixiert und dann wieder fest mit dem Gestell (4) verbunden werden. Alternativ kann auf die Halterung (18) verzichtet werden, insbesondere wenn die Aufnahme eine geeignete mehrachsige Führung mit formschlüssigem Halt bietet.

Die Bauteilzentrierungen (7) haben ein oder mehrere geeignete Zentrierelemente (8), die zum Beispiel als Zentrierstifte ausgebildet sind. Die hierfür vorgesehene Aufnahme (11) ist als Säule oder Zapfen ausgebildet, die ein oder mehrere formangepasste Aufnahmebohrungen (16) zum passgenauen Aufnehmen der Zentrierstifte (8) aufweist. Vorzugsweise ist die Aufnahmebohrung (16) vertikal ausgerichtet und weist mit ihrer Öffnung nach oben.

Für die Rohre (5) des Gestells (4) kann ebenfalls eine Aufnahme (12) vorhanden sein. Diese besitzt z.B. einen horizontal ausgerichteten Führungsstutzen (17), der passgenau in das Rohrende eingeführt werden kann. Hierüber kann die Rohrausrichtung in drei Achsen überprüft und eingestellt werden, wobei mittels der Einfahrtiefe und eines definierten Anschlags auch die Axialposition überprüfbar ist.

Die Aufnahmebohrung (16) und der Führungsstutzen (17) bilden durch ihre in mehreren Achsen formschlüssige und passgenaue Verbindungsmöglichkeit mit den Zentrierstiften (8) und den Rohren (5) bereits eine temporäre Halterung, so dass hier die Fixierung über einfaches Aufstecken erfolgen kann. Zusätzliche Fixiermittel sind nicht erforderlich, können alternativ aber vorhanden sein.

Die Prüf- und Einstellvorrichtung (1) kann ferner ein oder mehrere Referenzpunkte zum Referieren und Einmessen des Roboters (3) aufweisen. Dies sind zum Beispiel vertikale Stifte mit exakt geformter und positionierter Spitze. An ein oder mehreren Referenzpunkten (13) (nur einer ist dargestellt) kann sich der Roboter (3) vor der Durchführung des Einrichtvorgangs referieren, wobei eventuelle Achsenfehler kompensiert werden können. Der Roboter (3) ist dann in der Lage, mit der Greifeinrichtung (2) und den Funktionsteilen (5,6,7) die gespeicherten Soll-Positionen exakt anzufahren.

Die vorbeschriebenen Aufnahmen (10,11,12) sind vorzugsweise gemeinsam an einem säulenartigen Träger oder Ständer (9) angeordnet und haben eine bekannte oder durch den vorerwähnten Teaching-Vorgang ermittelte Position und Orientierung. Die Spanneraufnahme (10), die Bauteilzentrierungsaufnahme (11) und der Referenzpunkt (13) sind hierbei vorzugsweise gemeinsam auf einer Platte am oberen Ende des Ständers (9) angeordnet. Die Rohraufnahme (12) kann mit Abstand hiervon seitlich am Ständer (9) angeordnet sein.

In der gezeigten Ausführungsform sind die Aufnahmen (10,11,12) jeweils in einem einzelnen Exemplar vorhanden und gemeinsam am Ständer (9) angeordnet. Alternativ können sie an mehreren unterschiedlichen Trägern oder Ständern positioniert sein. Ferner ist es möglich, mehrere gleichartige Aufnahmen (10,11,12) an entsprechenden Positionen und an gemeinsamen oder unterschiedlichen Trägern oder Ständern anzuordnen. Hierbei kann wahlweise die eine oder andere Aufnahme (10,11,12) vom Roboter angefahren werden. Ferner ist es möglich, bei mehreren im gegenseitigen Bezug angeordneten Aufnahmen (10,11,12) mehrere dieser Aufnahmen (10,11,12) gleichzeitig anzufahren und hierbei mehrere Funktionsteile (5,6,7) gleichzeitig und gemeinsam zu prüfen und einzurichten.

Ferner ist es möglich, mehrere Aufnahmen (10,11,12) zu einer Lehreneinheit zusammenzufassen und damit die komplette Vorrichtung (2) bzw. Greifeinrichtung oder ein oder mehrere Teilbereiche hiervon zu prüfen und einzurichten. Ein gemeinsames Prüfen und Einrichten mehrerer Funktionsteile (5,6,7) ist vor allem dann möglich und sinnvoll, wenn alle zugehörigen Aufnahmen (10,11,12) in einer Anfahr- oder Zuführbewegung des Roboters (3) erreicht werden können.

Abwandlungen der gezeigten Ausführungsform sind in verschiedener Weise möglich. Zum einen kann die Ausbildung und Positionierung der Aufnahmen (10,11,12) variieren. Statt Anschlagkörpern (14) können andere formschlüssige Positioniermittel für die Spanneraufnahme (6) verwendet werden. Variierbar ist auch die Bauteilzentrierungsaufnahme (11), die bei Verwendung anderer Zentriermittel (8), zum Beispiel Zentrierkalotten an Stelle von Zentrierstiften, entsprechend anders ausgebildet und gegebenenfalls auch positioniert ist, wobei sie für die Formkompatibilität mit Zentrierkalotten entsprechende Zentrierzapfen oder dergleichen aufweist. Eine entsprechende Formumkehr ist auch bei der Rohraufnahme (12) möglich, die statt des innenseitig eingeführten Führungsstutzens (17) eine außenseitig über das Rohr (5) zu stülpende Führungsmuffe haben kann.

In weiterer Abwandlung können die Aufnahmen (10,11,12) an anderen geeigneten Stellen im Arbeitsbereich des Roboters (3) angebracht sein, z.B. an einem Spannwerkzeug (nicht dargestellt). Sie müssen auch nicht an einer Stelle vereint sein. Beispielsweise können die Aufnahmen (10,11,12) auch am Sockel oder an anderer Stelle des Roboters (3) angebracht sein. Gleiches gilt für den oder die Referenzpunkte (13).

Die beschriebene Prüf- und Einstellvorrichtung (1) kann nicht nur zum Einrichten und Referieren, sondern auch zum Prüfen der Greifeinrichtung (2) verwendet werden, wobei sie die vorbeschriebene Kontrollvorrichtung (19) gegebenenfalls ersetzen kann. In diesem Fall bewegt der Roboter die verschiedenen zu überprüfenden Funktionsteile (5,6,7) nacheinander zu den zugehörigen Aufnahmen (10,11,12) in die Soll-Position. Die exakte Positionierung kann durch einen Werker überwacht und kontrolliert werden. Dies kann alternativ auch automatisch über entsprechende Sensoren an den Aufnahmen (10,11,12) geschehen, die mit der Robotersteuerung verbunden sind. Dies können zum Beispiel Kontaktsensoren oder Abstandssensoren sein, die einen aus Sicherheitsgründen in einer Prüfposition einzunehmenden Abstand zwischen den Funktionsteilen (5,6,7) und den zugehörigen Aufnahmen (10,11,12) an mehreren räumlich verteilten Stellen messen und mit einem Vorgabewert vergleichen. Bei Abweichungen vom Sollwert wird ein Warnsignal ausgegeben und gegebenenfalls der Roboter (3) bis zur Reparatur und dem erneuten Einrichten der Greifeinrichtung (2) abgeschaltet.

### BEZUGSZEICHENLISTE

- 1: Prüf- und Einstellvorrichtung
- 2: Vorrichtung, Greifeinrichtung
- 3: Roboter
- 4: Gestell
- 5: Funktionsteil, Rohr
- 6: Funktionsteil, Spanner
- 7: Funktionsteil, Bauteilzentrierung
- 8: Zentrierelement, Zentrierstift
- 9: Träger, Ständer
- 10: Aufnahme, Spanneraufnahme
- 11: Aufnahme, Bauteilzentrierungsaufnahme
- 12: Aufnahme, Rohraufnahme
- 13: Referenzpunkt für Roboter
- 14: Anschlagkörper
- 15: Anschlagfläche
- 16: Aufnahmebohrung
- 17: Führungsstutzen
- 18: temporäre Halterung, Schraubverbindung
- 19: Kontrollvorrichtung
- 20: Laserstrahl
- 21: Reflektor
- 22: Roboterhand

## Patentansprüche

1. Verfahren zum Prüfen und/oder Einstellen von Funktionsteilen (5,6,7) von robotergeführten Vorrichtungen (2), insbesondere Greifeinrichtungen, **dadurch gekennzeichnet, dass** die Vorrichtung (2) vom Roboter (3) an eine in seinem Arbeitsbereich angeordnete Prüf- und Einstellvorrichtung (1) herangeführt wird, welche ein oder mehrere formschlüssige Aufnahmen (10,11,12) zur genauen Positionierung des oder der Funktionsteile (5,6,7) der Vorrichtung (2) aufweist, wobei mindestens ein Funktionsteil (5,6,7) in formschlüssigen Kontakt mit mindestens einer Aufnahme (10,11,12) gebracht wird.

2. Verfahren nach Anspruch 1, **dadurch**
**gekennzeichnet, dass** zum Einrichten die feste Verbindung des Funktionsteils (5,6,7) in der Vorrichtung (2) gelockert oder gelöst wird und das beweglich gemachte Funktionsteil (5,6,7) an der Aufnahme (10,11,12) formschlüssig positioniert und ausgerichtet wird, wobei anschließend das Funktionsteil (5,6,7) wieder in der Vorrichtung (2) fixiert wird.

3. Verfahren nach Anspruch 1, **dadurch**
**gekennzeichnet, dass** das an der Aufnahme (10,11,12) formschlüssig positionierte und ausgerichtete Funktionsteil (5,6,7) dort zumindest temporär fixiert wird.

4. Prüf- und Einstellvorrichtung für Funktionsteile (5,6,7) von robotergeführten Vorrichtungen (2), insbesondere Greifeinrichtungen, **dadurch**
**gekennzeichnet, dass** die Prüf- und Einstellvorrichtung (1) im Arbeitsbereich des Roboters (3) angeordnet ist und ein oder mehrere formschlüssige Aufnahmen (10,11,12) zur genauen Positionierung des oder der Funktionsteile (5,6,7) der Vorrichtung (2) aufweist.

5. Prüf- und Einstellvorrichtung nach Anspruch 4, **dadurch gekennzeichnet, dass** die Aufnahme (10,11,12) eine Einrichtung zum zumindest temporären Fixieren des Funktionsteils (5,6,7) aufweist.

6. Prüf- und Einstellvorrichtung nach Anspruch 4 oder 5, **dadurch gekennzeichnet, dass** die Prüf- und Einstellvorrichtung (1) stationär angeordnet ist.

7. Prüf- und Einstellvorrichtung nach Anspruch 4, 5 oder 6, **dadurch gekennzeichnet, dass** die Aufnahme (10) für einen Spanner (6) einen Anschlagkörper (14) mit ein oder mehreren Anschlagseiten für ein oder mehrere definierte Anschlagflächen (15) das Spanners (6) und eine temporäre Halterung (18) aufweist.

8. Prüf- und Einstellvorrichtung nach nach einem der vorhergehenden Ansprüche, **dadurch**
**gekennzeichnet, dass** die temporäre Halterung (18) als Schraubverbindung ausgebildet ist.

9. Prüf- und Einstellvorrichtung nach einem der vorhergehenden Ansprüche 4 bis 6, **dadurch**
**gekennzeichnet, dass** die Aufnahme (11) für eine Bauteilzentrierung (7) als formkomplementäre Aufnahmebohrung (16) für einen Zentrierstift (8) ausgebildet ist.

10. Prüf- und Einstellvorrichtung nach einem der vorhergehenden Ansprüche 4 bis 6, **dadurch**
**gekennzeichnet, dass** die Aufnahme (12) für ein Rohr (5) des Greifergestells (4) einen vorstehenden und in das Rohrende (5) passenden Führungsstutzen (17) aufweist.

11. Prüf- und Einstellvorrichtung nach einem der vorhergehenden Ansprüche, **dadurch**
**gekennzeichnet, dass** die Prüf- und Einstellvorrichtung (1) mindestens einen Referenzpunkt (13) für den Roboter (3) aufweist.

12. Prüf- und Einstellvorrichtung nach einem der vorhergehenden Ansprüche, **dadurch**
**gekennzeichnet, dass** die Aufnahmen (10,11,12) und der Referenzpunkt (13) gemeinsam an einem Träger (9) angeordnet sind.
